Europäisches Patentamt

European Patent Office

Office européen des brevets

(11) Veröffentlichungsnummer: **0 307 690 B1**

# EUROPÄISCHE PATENTSCHRIFT

(45) Veröffentlichungstag der Patentschrift: **18.03.92**

(51) Int. Cl.⁵: **A01G 13/10**

(21) Anmeldenummer: **88113950.5**

(22) Anmeldetag: **26.08.88**

(54) **Einrichtung zur Schneckenabwehr.**

(30) Priorität: **28.08.87 DE 3728731**

(43) Veröffentlichungstag der Anmeldung:
**22.03.89 Patentblatt 89/12**

(45) Bekanntmachung des Hinweises auf die
Patenterteilung:
**18.03.92 Patentblatt 92/12**

(84) Benannte Vertragsstaaten:
**AT BE CH DE FR GB IT LI NL SE**

(56) Entgegenhaltungen:
**EP-A- 0 232 914**
**DE-A- 3 023 309**
**DE-U- 8 602 472**
**GB-A- 2 095 962**

(73) Patentinhaber: **Sachtleben, Tobias**
**Oberföhringer Strasse 31**
**W-8000 München 81(DE)**

(72) Erfinder: **Sachtleben, Tobias**
**Oberföhringer Strasse 31**
**W-8000 München 81(DE)**

(74) Vertreter: **Vogeser, Werner, Dipl.-Ing. et al**
**Patentanwälte + Rechtsanwälte Hansmann,**
**Vogeser, Boecker & Alber Albert-**
**Rosshaupter-Strasse 65**
**W-8000 München 70(DE)**

Rank Xerox (UK) Business Services

## Beschreibung

Die Erfindung betrifft eine Einrichtung zur Schneckenabwehr nach dem Oberbegriff des Anspruchs 1.

Da Schnecken bei dem Betrieb von Gemüsekulturen enorme Schwierigkeiten machen, sind die verschiedensten Schneckenzäune entwickelt worden. So auch Einrichtungen, die einen überhängenden Kragen an der Unterseite mit Borsten oder Spitzen versehen, wie etwa bei der europäischen Patentanmeldung 0 232 914, die jedoch nur einen waagerecht abstehenden Kragen zeigt. Durch diese Oberfläche wird die Kontaktfläche reduziert und die Schnecken fallen wieder zu Boden. Die Herstellung dieser Einrichtung ist aufwendig und bei der Produktion durch Spritzgußverfahren problematisch, da die Formteile für die Borsten oder ähnliches leicht verstopfen. Andere herstellungsverfahren als solche aus Plastik sind wirtschaftlich uninteressant.

Der Erfindung liegt die Aufgabe zugrunde, die Herstellung eines effizienten Schneckenzaunes wirtschaftlich zu gestalten.

Die Lösung dieser Aufgabe ist im Anspruch 1 gekennzeichnet. Vorteilhafte Ausgestaltungen des Erfindungsgedankens ergeben sich aus den Unteransprüchen.

Vorteil der Erfindung ist, da eine wirtschaftliche und einfache Herstellung, insbesondere im Stranggußverfahren, möglich ist.

Ein Ausführungsbeispiel der Erfindung ist in der Zeichnung dargestellt und wird im folgenden näher beschrieben. Es zeigen:

Fig. 1    einen Querschnitt durch die Einrichtung zur Schneckenabwehr

Fig. 2    die Steckverbindung der Einzelsegmente

Fig. 3    die Grundformen der Einzelsegmente

Fig. 4    Ausgestaltungsform der Einrichtung zur Schneckenabwehr

Fig. stellt die Fundtionsweise des Schneckenzaunes dar. Es wird in den Boden gesteckt, was durch spitzenförmige Ausgestaltung erleichtert wird (siehe Fig. 4).

So werden Beete oder einzelne Pflanzen, z. B. durch Zusammenstecken von $\frac{1}{4}$-Rundungen, eingefriedet. Bereits eingewanderte Schnecken müssen abgesammelt werden. Neu zuwandernde Schnecken, angelockt durch die Gerüche von frisch wachsenden Pflanzen, müssen nun diesen Zaun überwinden. Dabei stossen sie in den Winkel zwischen Zaun (2) und den Kragen (1) auf die mit Lamellen bewehrte Fläche. Die ist nicht passierbar und jeder Versuch führt zu einem Herabfallen der Schnecken, da die Kontaktfläche der Lamellen zu gering ist, um das Eigengewicht der Schnecken zu halten.

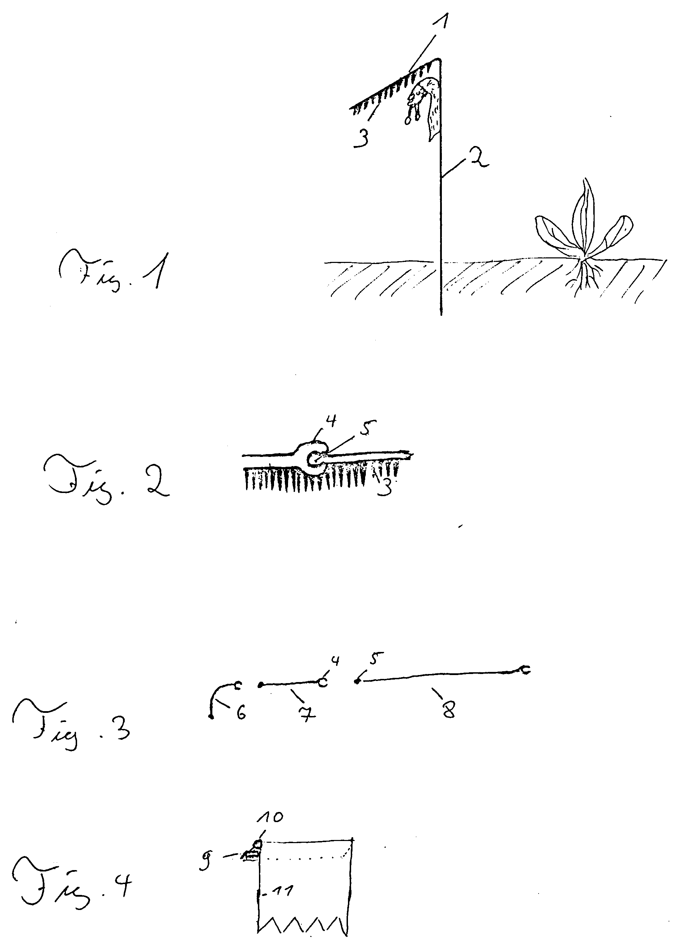

Fig. 2 zeigt die Steckverbindung bei der eine Seite als Klammer (4) und die andere als umfaßbare Noppe (5) ausgebildet ist. Die Steckverbindung kann so ausgebildet sein, daß sie entlang der gesamten Kante, der sich berührenden Segmente ausgebildet ist oder nur an 3 Stellen, am Kragenrand (9), in der Rundung (10) und auf 3/4 der Strecke (11) zum Boden hin. Die Ausgestaltung ist so, daß an keiner Stelle die Einrichtung für Schnekken passierbar ist.

Fig. 3 zeigt die Formteile, die $\frac{1}{4}$-Rundung (6), die auch als Kreis, zum Schutz von Einzelpflanzen, zusammengestellt werden können. Ferner die verschieden langen geraden Abschnitte (7) und (8).

Fig. 4 zeigt eine perspektivische Aufsicht mit den 3 vorher erwähnten Klammern (9/10/11). Die palisadenartige Ausgestaltung am Fuß des Zaunes erleichtert das Einstecken in den Boden.

## Patentansprüche

1.  Einrichtung zur Schneckenabwehr dessen nebeneinander anzuordnende Elemente eine senkrechte Fläche (2) und an deren oberen Ende anschließende, nach außen überhängende Fläche (1) aufweist, von der nach unten eng nebeneinander angeordnete Hindernisse so wegragen, daß die Kontaktfläche für Schnekken auf die freien Enden der Hindernisse beschränkt ist
    **dadurch gekennzeichnet, daß**
    es sich bei den Hindernissen um in Längsrichtung nebeneinander angeordnete, in wesentlichen parallele Lamellen (3) mit geringer Kontaktfläche am freien Ende handelt.

2.  Einrichtung nach Anspruch 1,
    **dadurch gekennzeichnet, daß**
    die überhängende Fläche (1) von der senkrechten Fläche (2) aus schräg nach unten abstrebt.

3.  Einrichtung nach Anspruch 1 oder 2,
    **dadurch gekennzeichnet, daß**
    die Unterkante der senkrechten Fläche (2) in Form einer Zickzack-Linie spitzenförmig ausgebildet ist.

4.  Einrichtung nach einem der vorhergehenden Ansprüche,
    **dadurch gekennzeichnet, daß**
    die Elemente untereinander mittels Noppen (5) und diese umfassenden Klammern (4) miteinander verbunden werden.

5.  Einrichtung nach einem der vorhergehenden Ansprüche,
    **dadurch gekennzeichnet, daß**
    als Elemente $\frac{1}{4}$-Rundungen (6) und verschieden lange gerade Teile (7, 8) vorhanden sind.

## Claims

1. The elements of the setting for the controlling of slugs are placed side by side, thus forming a vertical surface (2) which on the upper edge is extended by a surface hanging over to the outside, from which very closely placed hindrances stand out in such a way that the contact area for slugs to the free endings of the hindrances is restricted, characterized by the hindrances being lamella (3) placed in longitudinal direction, one next to the other, mainly in a parallel order with very little contact area on the free endings.

2. Setting according to claim 1 characterized by the surface (1) hanging over the (upper edge of the) vertical surface (2) spreading diagonally towards the bottom.

3. Setting according to claim 1 or 2 characterized by the bottom edge of the vertical surface (2) representing a zigzag (border)-line.

4. Setting according to one of the aforementioned claims characterized by the elements being connected to each other by means of loops (5) which again are connected with clamps.

5. Setting according to one of the aforementioned claims characterized by the elements being 1/4 roundings and straight parts of different lengths.

## Revendications

1. Construction destinée à la protection contre les escargots, dont les éléments à disposer côte à côte sont une surface verticale (2) prolongée à son extrémité supérieure par une surface en surplomb, de laquelle tombent des obstacles très rapprochés les uns des autres, de telle façon que la surface de contact pour les escargots est limitée aux extrémités dégagées des obstacles,
**caractérisée par le fait**
que les obstacles sont constitués par des lamelles (3), disposées côte à côte dans le sens de la longueur et essentiellement parallèles, présentant une faible surface de contact à l'extrémité dégagée.

2. Construction selon revendication 1,
**caractérisée par le fait**
que la surface en surplomb (1) part de la surface verticale (2) pour descendre en diagonale.

3. Construction selon revendication 1 ou 2,
**caractérisée par le fait**
que l'arrête inférieure de la surface verticale (2) est façonnée pour former une ligne en zigzag pointue.

4. Construction selon l'une des revendications précitées,
**caractérisée par le fait**
que les éléments sont reliés entre eux au moyen de nopes et ces dernières encerclées par des agraffes.

5. Construction selon l'une des revendications précitées,
**caractérisée par le fait**
que les éléments sont constitués par des quarts de courbures (6) et des pièces droites de différentes longueurs (7,8).

Fig. 1

Fig. 2

Fig. 3

Fig. 4